# EUROPÄISCHE PATENTSCHRIFT

(11) **EP 1 410 971 B1**
(45) Veröffentlichungstag und Bekanntmachung des Hinweises auf die Patenterteilung: **04.10.2006**
(21) Anmeldenummer: 03015259.9
(22) Anmeldetag: 07.07.2003
(51) Int. Cl.: B62D 1/16

(54) **Lenksäule**
Steering column
Colonne de direction

(30) Priorität: 15.10.2002 DE 10248913
(43) Veröffentlichungstag der Anmeldung: 21.04.2004
(73) Patentinhaber: Valeo Schalter und Sensoren GmbH, 74321 Bietigheim-Bissingen (DE)
(72) Erfinder: Mozer, Reiner, 71665 Vaihingen/Enz (DE); Morgenroth, Kai Thorsten, 74357 Bönnigheim (DE); Horst, Daniel, 74321 Bietigheim-Bissingen (DE)
(74) Vertreter: Dreiss, Fuhlendorf, Steimle & Becker

(56) Entgegenhaltungen:
- DE-A- 3 150 427
- DE-A- 19 942 818
- PATENT ABSTRACTS OF JAPAN vol. 1996, no. 12, 26. Dezember 1996 (1996-12-26) -& JP 08 213134 A (ASAHI DENSO KK), 20. August 1996 (1996-08-20)

## Beschreibung

Die Erfindung betrifft eine Lenksäule, insbesondere eines Kraftfahrzeugs, mit einem Lenksäulenmodul und einer Lenkradnabe, wobei die Lenksäule eine Lenkwelle und ein Mantelrohr aufweist, und am freien Ende der Lenkwelle die Lenkradnabe befestigt ist, und das Lenksäulenmodul einen ersten, drehbaren Abschnitt und einen zweiten, mit dem Mantelrohr verbundenen Abschnitt aufweist.

Üblicherweise werden Lenksäulenmodule am freien Ende des Mantelrohrs mit einer Klemmschelle oder mit Schrauben befestigt. Dies hat den wesentlichen Nachteil, dass zusätzliche Bauteile, wie Schellen, Schrauben, Muttern, eventuell Scheiben und Sicherungsmittel erforderlich sind. Außerdem bedarf es eines separaten Befestigungsvorganges, um das Lenksäulenmodul am Mantelrohr zu befestigen. Oftmals herrscht kaum ausreichend Platz, um mittels eines Werkzeugs die Klemmschelle zu fixieren bzw. die Schrauben zu betätigen.

Der Erfindung liegt daher die Aufgabe zugrunde, eine Lenksäule bereitzustellen, bei der zusammen mit dem Montagevorgang des Lenkrades das Lenksäulenmodul auf dem Mantelrohr fixiert werden kann.

Diese Aufgabe wird erfindungsgemäß mit einer Lenksäule der eingangs genannten Art dadurch gelöst, dass der zweite Abschnitt sich in axialer Richtung am Mantelrohr abstützt, dass zwischen dem ersten und dem zweiten Abschnitt ein Axialdrucklager angeordnet ist und dass der erste Abschnitt von der Lenkradnabe axial in Richtung des zweiten Abschnitts gedrückt wird.

Die erfindungsgemäße Lenksäule hat den wesentlichen Vorteil, dass das Lenksäulenmodul nicht mehr separat am Mantelrohr befestigt werden muss. Mit dem Aufsetzen des Lenkrads und Befestigen der Lenkradnabe an der Lenkwelle wird gleichzeitig auch das Lenksäulenmodul zwischen der Lenkradnabe und dem Mantelrohr befestigt. Dabei wird das Lenksäulenmodul beim Aufschrauben der Lenkradnabe axial bewegt, bis es am Mantelrohr anliegt. Dies kann die Stirnfläche des Mantelrohrs oder eine geeignete Schulter am Mantelrohr sein.

Gemäß einem bevorzugten Ausführungsbeispiel weist das Lenksäulenmodul einen das Mantelrohr umgebenden und den zweiten Abschnitt aufnehmenden Träger auf. Dieser Träger umgreift nach Art einer Hülse das Mantelrohr und stützt sich am axialen Ende des Mantelrohrs ab.

Gemäß einem bevorzugten Ausführungsbeispiel weist das Lenksäulenmodul einen das Mantelrohr umgebenden und den zweiten Abschnitt aufweisenden Träger auf. Dieser Träger umgreift nach Art einer Hülse das Mantelrohr und stützt sich am axialen Ende des Mantelrohrs ab. In diesem Träger ist der zweite Abschnitt gelagert. Um den Träger gegen Verdrehung bezüglich des Mantelrohrs zu sichern, weist der Träger eine Verdrehsicherung auf. Diese Verdrehsicherung wirkt mit dem Mantelrohr zusammen, zum Beispiel mittels einer Verrastung. Diese Verrastung ist so ausgebildet, dass sie aktiviert wird, wenn das Lenksäulenmodul auf das Mantelrohr aufgeschoben wird, so dass dieses am Mantelrohr gegen Verdrehung gesichert ist.

Mit Vorzug ist das Lenksäulenmodul in axialer Richtung komprimierbar. Hierfür weist das Lenksäulenmodul eine Axialdruckfeder, insbesondere wenigstens eine Wendelfeder, Tellerfeder oder dergleichen auf. Die Axialdruckfeder erzeugt eine in axialer Richtung wirkende Kraft, mit der der zweite Abschnitt des Lenksäulenmoduls in axialer Richtung am Mantelrohr gehalten wird. Die Axialdruckfeder wird dadurch komprimiert, dass die Lenkradnabe auf das freie Ende der Lenkwelle aufgeschraubt wird.

Vorteilhaft ist die Axialdruckfeder im ersten oder zweiten Abschnitt angeordnet, was weiter unten im einzelnen noch beschrieben ist. Zum Beispiel ist die Axialdruckfeder im Träger angeordnet, wobei mit dem zweiten Abschnitt die Axialdruckfeder komprimierbar ist. Dies hat den Vorteil, dass sowohl der Träger, als auch die Axialdruckfeder und der zweite Abschnitt gegen Verdrehung am Mantelrohr gesichert sind.

Bei einem anderen Ausführungsbeispiel ist der erste Abschnitt in axialer Richtung zweigeteilt ausgebildet und ist die Axialdruckfeder zwischen den beiden Teilen angeordnet. Bei diesem Ausführungsbeispiel dreht sich die Feder zusammen mit dem Lenkrad, wobei der zweite Abschnitt mit dem Träger relativ einfach ausgestaltet sind.

Bei diesem Ausführungsbeispiel sind die beiden Teile des ersten Abschnitts miteinander verrastet und in axialer Richtung mit Spiel gegeneinander verschiebbar. Dadurch kann die Lenkradnabe auf das freie Ende der Lenkwelle aufgeschraubt werden, wodurch der erste Abschnitt komprimiert, das heißt die beiden Teile ineinander geschoben werden.

Weitere Vorteile, Merkmale und Einzelheiten ergeben sich aus den Unteransprüchen sowie der nachfolgenden Beschreibung, in der unter Bezugnahme auf die Zeichnung zwei besonders bevorzugte Ausführungsbeispiele im einzelnen beschrieben sind. Dabei können die in der Zeichnung dargestellten sowie in den Ansprüchen und in der Beschreibung erwähnten Merkmale jeweils einzeln für sich oder in beliebiger Kombination erfindungswesentlich sein.

In der Zeichnung zeigen:
- Figur 1: einen Längsschnitt durch eine erste Ausführungsform einer Lenksäule mit aufgesetztem Lenksäulenmodul; und
- Figur 2: einen Längsschnitt durch eine zweite Ausführungsform einer Lenksäule mit aufgesetztem Lenksäulenmodul.

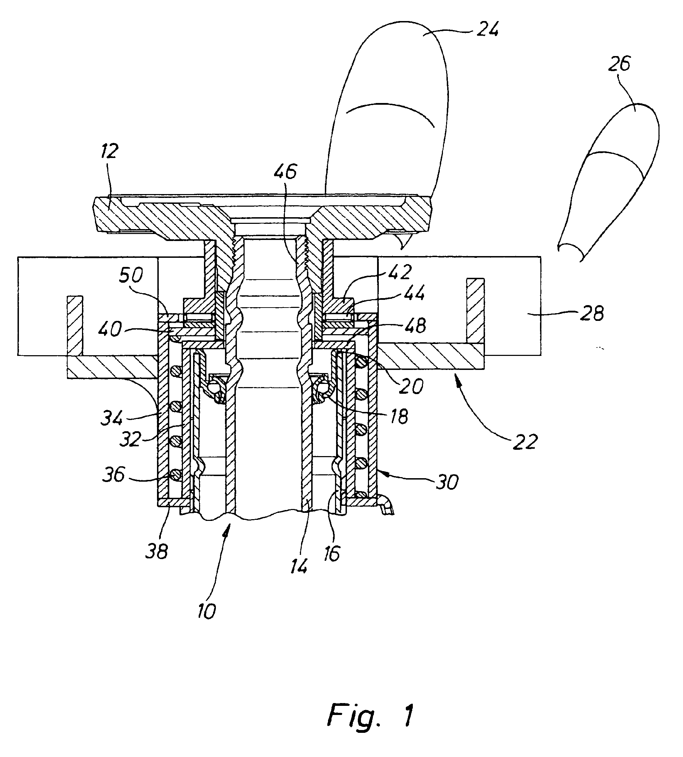

Die Figur 1 zeigt das dem Fahrgastraum zugewandte Ende einer insgesamt mit 10 bezeichneten Lenksäule, auf welche ein (nicht dargestelltes) Lenkrad mittels einer Lenkradnabe 12 aufgeschraubt wird. Die Lenksäule 10 weist eine drehbare Lenkwelle 14 auf, die von einem Mantelrohr 16 umgeben ist. Das Mantelrohr 16 ist drehfest mit der Karosserie des Fahrzeugs verbunden. Zwischen der Lenkwelle 14 und dem Mantelrohr 16 befindet sich ein Drehlager 18, welches lediglich andeutungsweise dargestellt ist, und mit welchem die Lenkwelle 14 im Mantelrohr 16 gelagert ist. Das Drehlager 18 besitzt einen Kragen 20, der aus dem Mantelrohr 16 herausragt und dessen freies Ende in radialer Richtung übergreift.

In Figur 1 ist außerdem ein insgesamt mit 22 bezeichnetes Lenksäulenmodul erkennbar, an welchem zum Beispiel ein oder mehrere Lenkstockschalter, von denen die Bedienelemente 24 und 26 andeutungsweise dargestellt sind, ein Drehwinkelsensor und andere Bauelemente befestigt sind, die zum Beispiel in einer Kassette 28 untergebracht sind. Das Lenksäulenmodul 22 weist einen hülsenförmigen Träger 30 auf, der das Mantelrohr 16 umgibt. Im Träger 30, der von einer Doppelhülse 32 und 34 gebildet wird, ist eine Axialdruckfeder 36 gelagert, deren unteres Ende an einem Boden 38 anliegt, und auf deren oberen Ende ein zweiter Abschnitt 40 des Lenksäulenmoduls 22 aufliegt.

Zum zweiten Abschnitt 40 in axialer Richtung benachbart befindet sich ein erster Abschnitt 42, auf dem direkt die Lenkradnabe 12 einwirkt. Zwischen dem ersten Abschnitt 42 und dem zweiten Abschnitt 40 befindet sich ein Axialdrucklager 44, welches die beiden Abschnitte 40 und 42 entkoppelt.

Wird die Lenkradnabe 12 auf den Konus 46 des freien Endes der Lenkwelle 14 aufgesetzt und aufgeschraubt, dann wird der erste Abschnitt 42 in Richtung des zweiten Abschnitts 40 bewegt und dadurch die Axialdruckfeder 36 komprimiert. Da sich die Axialdruckfeder 36 am Boden 38 des Trägers 30 abstützt, wird dieser Träger 30 in axialer Richtung auf das Mantelrohr 16, insbesondere auf den Kragen 20 gepresst und in axialer Richtung fixiert. Der Träger 30 stützt sich dabei mit einer Schulter 48 am Kragen 20 ab.

Der Träger 30 weist außerdem Nasen 50 auf, die radial nach innen vorspringen und den zweiten Abschnitt 40 und die Axialdruckfeder 36 zwischen der Schulter 48 und den Nasen 50 in axialer Richtung und unverlierbar halten. Der Abstand der Nasen 50 von der Schulter 48 ist so gewählt, dass der zweite Abschnitt 40 genügend weit axial verschoben werden kann, um eventuelle Aufschraubtoleranzen der Lenkradnabe 12 auf den Konus der Lenkwelle 14 ausgleichen zu können. Insbesondere kann der zweite Abschnitt 40 aus seiner in der Figur 1 dargestellten Mittellage sowohl nach oben als auch nach unten jeweils um 3 bis 5 mm verlagert werden, ohne dass dadurch die axiale Position des Trägers 30 verändert wird.

Die Verdrehsicherung des Trägers 30 am Mantelrohr 16 erfolgt über nicht dargestellte Verdrehsicherungen, zum Beispiel eine radiale Nase am Träger 30, die in eine entsprechende Öffnung am Mantelrohr 16 einrastet, sobald der Träger 30 auf das Mantelrohr 16 aufgeschoben worden ist.

Aus Figur 1 wird deutlich, dass mit dem Aufschrauben der Lenkradnabe 12 auf die Lenkwelle 14 das Lenksäulenmodul 22 am Mantelrohr 16 fixiert wird. Auf Klemmschellen kann somit verzichtet werden.

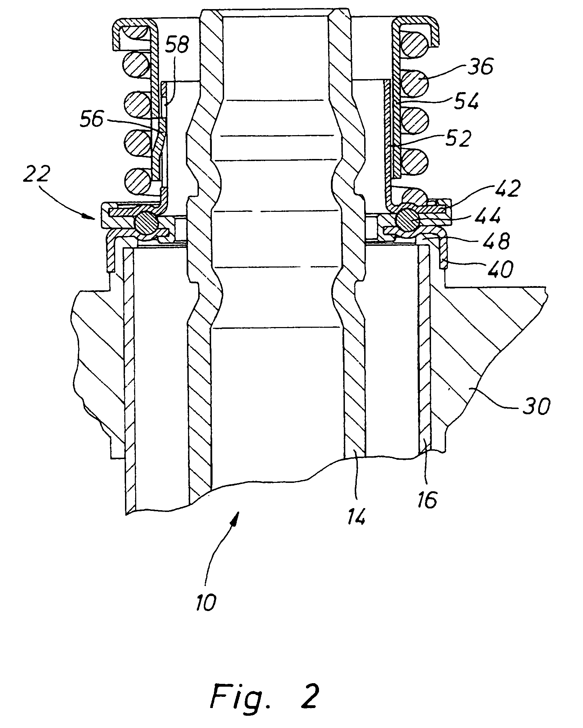

In der Figur 2 ist ein zweites Ausführungsbeispiel dargestellt, bei dem ebenfalls eine Lenkwelle 14 in einem Mantelrohr 16 angeordnet ist. Auf das Mantelrohr 16 ist ebenfalls ein Träger 30 aufgesetzt und stützt sich mit seiner Schulter 48 am axialen Ende des Mantelrohrs 16 ab. Die Schulter 48 ist vom zweiten Abschnitt 40 umgeben, wobei zwischen dem zweiten Abschnitt 40 und dem ersten Abschnitt 42 das Axialdrucklager 44 angeordnet ist. Über das Axialdrucklager 44 sind der erste und der zweite Abschnitt 42 und 40 in axialer Richtung miteinander gekoppelt, jedoch gegeneinander verdrehbar.

Der erste Abschnitt 42 besteht aus einem ersten Teil 52 und einem zweiten Teil 54, die in axialer Richtung gegeneinander verschieblich sind und zwischen denen die Axialdruckfeder 36 angeordnet ist. Die Axialdruckfeder 36 drängt die beiden Teile 52 und 54 in axialer Richtung auseinander, wobei der Verschiebeweg der beiden Teile 52 und 54 durch eine Rastnase 56 begrenzt ist, die in ein Langloch 58 am ersten Teil 52 eingreift. Die Rastnase 56 rastet in das Langloch 58 ein, sobald das zweite Teil 54 zusammen mit der Axialdruckfeder 36 auf das erste Teil 52 aufgeschoben worden ist. Die Axialdruckfeder 36 ist unverlierbar zwischen den beiden Teilen 52 und 54 gehalten.

Wird nun, wie in Figur 1 dargestellt, die Lenkradnabe 12 auf die Lenkwelle 14 aufgeschraubt, dann wird der erste Abschnitt 42 und mit diesem die Axialdruckfeder 36 komprimiert und die beiden Teile 52 und 54 zusammengeschoben. Dabei wird der zweite Abschnitt 40 und somit die Schulter 48 an die Stirnfläche des Mantelrohres 16 gepresst. Der Träger 30 ist dadurch axial am Mantelrohr 16 fixiert. Eine Sicherung gegen Verdrehung des Trägers 30 bezüglich des Mantelrohrs 16 erfolgt durch eine (nicht dargestellte) Verdrehsicherung, indem zum Beispiel eine am Träger 30 vorgesehene Nase radial in eine am Mantelrohr 16 vorgesehene Öffnung einrastet.

Mit der erfindungsgemäßen Lenksäule 10 wird der wesentliche Vorteil geschaffen, dass zur Befestigung des Lenksäulenmoduls 22 keine Klemmschellen, Schrauben oder dergleichen Bauteile mehr erforderlich sind, da bereits mit dem Aufschrauben der Lenkradnabe 12 auf die Lenkwelle 14 das Lenksäulenmodul 22 in axialer Richtung am Mantelrohr 16 fixiert wird.

## Patentansprüche

1. Lenksäule (10), insbesondere eines Kraftfahrzeugs, mit einem Lenksäulenmodul (22) und einer Lenkradnabe (12), wobei die Lenksäule (10) eine Lenkwelle (14) und ein Mantelrohr (16) aufweist, und am freien Ende der Lenkwelle (14) die Lenkradnabe (12) befestigt ist, und das Lenksäulenmodul (22) einen ersten, drehbaren Abschnitt (42) und einen zweiten, mit dem Mantelrohr (16) verbundenen Abschnitt (40) aufweist, **dadurch gekennzeichnet, dass** der zweite Abschnitt (40) sich in axialer Richtung am Mantelrohr (16) abstützt, dass zwischen dem ersten und dem zweiten Abschnitt (42 und 40) ein Axialdrucklager (44) angeordnet ist und dass der erste Abschnitt (42) von der Lenkradnabe (12) axial in Richtung des zweiten Abschnitts (40) gedrückt wird.

2. Lenksäule nach Anspruch 1, **dadurch gekennzeichnet, dass** das Lenksäulenmodul (22) einen das Mantelrohr (16) umgebenden und den zweiten Abschnitt (40) aufweisenden Träger (30) aufweist.

3. Lenksäule nach Anspruch 2, **dadurch gekennzeichnet, dass** der Träger (30) eine Verdrehsicherung aufweist.

4. Lenksäule nach Anspruch 3, **dadurch gekennzeichnet, dass** die Verdrehsicherung mit dem Mantelrohr (16) zusammenwirkt.

5. Lenksäule nach Anspruch 4, **dadurch gekennzeichnet, dass** die Verdrehsicherung und das Mantelrohr (16) miteinander verrasten.

6. Lenksäule nach einem der vorhergehenden Ansprüche, **dadurch gekennzeichnet, dass** das Lenksäulenmodul (22) in axialer Richtung komprimierbar ist.

7. Lenksäule nach Anspruch 6, **dadurch gekennzeichnet, dass** das Lenksäulenmodul (22) eine Axialdruckfeder (36), insbesondere wenigstens eine Wendelfeder, Tellerfeder oder dergleichen, aufweist.

8. Lenksäule nach Anspruch 7, **dadurch gekennzeichnet, dass** die Axialdruckfeder (36) im ersten oder zweiten Abschnitt (42 oder 40) angeordnet ist.

9. Lenksäule nach Anspruch 2 und 8, **dadurch gekennzeichnet, dass** die Axialdruckfeder (36) im Träger (30) angeordnet ist und mit dem zweiten Abschnitt (40) die Axialdruckfeder (36) komprimierbar ist.

10. Lenksäule nach Anspruch 2 und 8, **dadurch gekennzeichnet, dass** der erste Abschnitt (42) in axialer Richtung zweigeteilt ist und die Axialdruckfeder (36) zwischen den beiden Teilen (52 und 54) angeordnet ist.

11. Lenksäule nach Anspruch 10, **dadurch gekennzeichnet, dass** die beiden Teile (52 und 54) miteinander verrastet sind und in axialer Richtung mit Spiel gegeneinander verschieblich sind.

## Claims

1. A steering column (10), in particular of a motor vehicle, having a steering column module (22) and a steering wheel hub (12), in which the steering column (10) has a steering shaft (14) and a casing tube (16), and the steering wheel hub (12) is secured to the free end of the steering shaft (14), and the steering column module (22) has a first, rotatable portion (42) and a second portion (40), joined to the casing tube (16), **characterized in that** the second portion (40) is braced in the axial direction on the casing tube (16); that an axial pressure bearing (44) is disposed between the first and second portions (42 and 40); and that the first portion (42) is pressed by the steering wheel hub (12) axially in the direction of the second portion (40).

2. The steering column as defined by claim 1, **characterized in that** the steering column module (22) has a carrier (30), which surrounds the casing tube (16) and has the second portion (40).

3. The steering column as defined by claim 2, **characterized in that** the carrier (30) has a torsion preventer.

4. The steering column as defined by claim 3, **characterized in that** the torsion preventer cooperates with the casing tube (16).

5. The steering column as defined by claim 4, **characterized in that** the torsion preventer and the casing tube (16) are interlocked.

6. The steering column as defined by one of the foregoing claims, **characterized in that** the steering column module (22) is compressible in the axial direction.

7. The steering column as defined by claim 6, **characterized in that** the steering column module (22) has an axial compression spring (36), in particular at least one spiral spring, cup spring, or the like.

8. The steering column as defined by claim 7, **characterized in that** the axial compression spring (36) is disposed in the first or second portion (42 or 40).

9. The steering column as defined by claims 2 and 8, **characterized in that** the axial compression spring (36) is disposed in the carrier (30), and the axial compression spring (36) is compressible with the second portion (40).

10. The steering column as defined by claims 2 and 8, **characterized in that** the first portion (42) is split in two in the axial direction, and the axial compression spring (36) is disposed between the two parts (52 and 54).

11. The steering column as defined by claim 10, **characterized in that** the two parts (52 and 54) are interlocked and are displaceable with play counter to one another in the axial direction.

## Revendications

1. Colonne de direction (10), en particulier d'un véhicule automobile, avec un module de colonne de direction (22) et une commande de direction (12), la colonne de direction (10) comportant un arbre de direction (14) et. un tube (16), et la commande de direction (12) étant fixée à l'extrémité libre de l'arbre de direction (14), et le module de colonne de direction (22) présentant un premier segment (42) rotatif et un deuxième segment (40) relié au tube (16), **caractérisé en ce que** le deuxième segment (40) s'appuie sur le tube (16) en direction axiale, **en ce qu'**entre le premier et le deuxième segment (42 et 40) est disposé un palier de pression axiale (44) et **en ce que** le premier segment (42) de la commande de direction (12) est comprimé axialement dans la direction du deuxième segment (40).

2. Colonne de direction selon la revendication 1, **caractérisée en ce que** le module de colonne de direction (22) comporte un support (30) entourant le tube (16) et comprenant le deuxième segment (40).

3. Colonne de direction selon la revendication 2, **caractérisée en ce que** le support (30) présente une protection anti-rotation.

4. Colonne de direction selon la revendication 3, **caractérisée en ce que** la protection anti-rotation coopère avec le tube (16).

5. Colonne de direction selon la revendication 4, **caractérisée en ce que** la protection anti-rotation et le tube (16) s'accrochent ensemble.

6. Colonne de direction selon l'une quelconque des revendications précédentes, **caractérisée en ce que** le module de colonne de direction (22) est comprimable dans la direction axiale.

7. Colonne de direction selon la revendication 6, **caractérisée en ce que** le module de colonne de direction (22) comporte un ressort de pression axiale (36), en particulier au moins un ressort hélicoïdal, une rondelle conique ou similaire.

8. Colonne de direction selon la revendication 7, **caractérisée en ce que** le ressort de pression axiale (36) est disposé dans le premier ou le deuxième segment (42 ou 40).

9. Colonne de direction selon l'une quelconque des revendications 2 et 8, **caractérisée en ce que** le ressort de pression axiale (36) est disposé dans le support (30) et **en ce que** le ressort de pression axiale (36) peut être comprimé avec le deuxième segment (40).

10. Colonne de direction selon l'une quelconque des revendications 2 et 8, **caractérisée en ce que** le premier segment (42) est divisé en deux dans le sens axial et **en ce que** le ressort de pression axiale (36) est disposé entre les deux parties (52 et 54).

11. Colonne de direction selon la revendication 10, **caractérisée en ce que** les deux parties (52 et 54) s'accrochent ensemble et sont déplaçables avec un jeu l'une contre l'autre, dans le sens axial.
